# EUROPEAN PATENT APPLICATION

(11) **EP 4 255 021 A1**
(43) Date of publication of application: **04.10.2023**
(21) Application number: 23165409.6
(22) Date of filing: 30.03.2023
(51) Int. Cl.: H04W 36/00, H04W 36/06, H04W 74/08

(54) **METHODS AND APPARATUS OF TA MAINTENANCE AND ACQUISITION FOR MOBILITY WITH INTER-CELL BEAM MANAGEMENT**

(30) Priority: 01.04.2022 WO PCT/CN2022/084793; 10.03.2023 CN 202310263532
(71) Applicant: MediaTek Singapore Pte. Ltd., Singapore 138628 (SG)
(72) Inventor: ZHANG, Xiaonan, Beijing (CN); ZHANG, Yuanyuan, Beijing (CN)
(74) Representative: Hoefer & Partner Patentanwälte mbB

(57) **Abstract**

Apparatus and methods are provided for TA maintenance and acquisition for mobility with inter-cell beam management. In one novel aspect, the source TAG is maintained (291) with the associated TAT running when cell switch is performed to switch from the source cell to a target cell and skips the RA procedure (281) when a valid target TAG exists. In one embodiment, the target TAG is valid (271) when there is the target TAG exists and a TAT of the target TAG is running. The UE performs a RA to the target (282) when the UE determines that there is no TAG associated with the target or when a TAT of the target TAG expires. The source cell and the target cell belong to the same cell group or different cell group. In one embodiment, the UE performs a partial MAC reset and maintaining a TAT associated with the source cell.

## Description

### TECHNICAL FIELD

The disclosed embodiments relate generally to wireless communication, and, more particularly, to timing advance (TA) maintenance and acquisition for mobility with inter-cell beam management (ICBM).

### BACKGROUND

In conventional network of 3rd generation partnership project (3GPP) 5G new radio (NR), when the UE moves from the coverage area of one cell to another cell, at some point a serving cell change needs to be performed. Currently serving cell change is triggered by layer three (L3) measurements and is done by radio resource control (RRC) Reconfiguration signaling with synchronization for change of primary cell (PCell) and primary and secondary cell (PSCell), as well as release/add for secondary cells (SCells) when applicable. The cell switch procedures involve complete L2 (and L1) resets, which causes longer latency, larger overhead and longer interruption time than beam switch mobility. To reduce the latency, overhead and interruption time during UE mobility, the mobility mechanism can be enhanced to enable a serving cell to change via beam management with L1/L2 signaling. The L1/L2 based inter-cell mobility with beam management should support the different scenarios, including intra-distributed unit (DU) / inter-DU inter-cell cell change, FR1/FR2, intra-frequency / inter-frequency, and source and target cells may be synchronized or non-synchronized.

In legacy handover (HO) design controlled by a series of L3 procedures including radio resource management (RRM) measurement and RRC Reconfiguration, ping-pong effects should be avoided with relatively long ToS (time of stay) in order to reduce the occurrences of HOs, accompanied with which is the reduce of signaling overhead and interruption during the overall lifetime of RRC connection. However, the drawback is that UE cannot achieve the optimized instantaneous throughput if the best beam does not belong to the serving cell. With the development of Ll/L2-based inter-cell mobility with beam management, the cell switch can take advantage of the ping-pong effects to further improve the system performance.

Improvements and enhancements are required for TA maintenance and acquisition for mobility with ICBM to take advantages for the cell switches.

### SUMMARY

Apparatus and methods are provided for TA maintenance and acquisition for mobility with inter-cell beam management. A method and an apparatus according to the invention are defined in the independent claims. The dependent claims define preferred embodiments thereof. In one novel aspect, the source TAG is maintained with the associated TAT running when cell switch is performed to switch from the source cell to a target cell and skips the RA procedure when a valid target TAG exists. Preferably, the UE maintains a plurality of TAGs; upon receiving an inter-cell beam management indication to switch from a first cell to a second cell, the UE determines whether a TAG associated with the second cell is valid upon receiving the inter-cell beam management indication to switch, and performs a cell switch to the second cell by skipping a random access (RA) process when the UE determines a second-cell TAG associated with the second cell is valid. Preferably, the second-cell TAG is determined to be valid when there is the second-cell TAG exists and a TAT of the second-cell TAG is running. The UE performs a RA to the second cell when the UE determines that there is no TAG associated with the second cell or when a TAT of the second-cell TAG expires. The UE creates and maintains the second-cell TAG associated with the second cell upon success of the RA to the second cell. The first cell and the second belongs to the same cell group or different cell group. For single stack based UE, the UE performs a partial MAC reset and maintaining a TAT associated with the first cell. For dual stack based UE, the UE creates a new MAC entity for the second cell with the second-cell TAG while keeping the first-cell TAG and the TAT of the first-cell TAG running.

This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 is a schematic system diagram illustrating an exemplary wireless network for TA maintenance and acquisition for mobility during ICBM in accordance with embodiments of the current invention.
Figure 2A illustrates an exemplary NR wireless system with centralized upper layers of the NR radio interface stacks in accordance with embodiments of the current invention.
Figure 2B illustrates an exemplary diagram for inter-cell beam management with TA maintenance in accordance with embodiments of the current invention.
Figure 3 illustrates an exemplary deployment scenario for intra-DU inter-cell beam management in accordance with embodiments of the current invention.
Figure 4 illustrates an exemplary deployment scenario for inter-DU inter-cell beam management in accordance with embodiments of the current invention.
Figure 5 illustrates an exemplary process for UE to partial reset MAC entity and maintain the TAG from the source cell if single stack is used at the UE side in accordance with embodiments of the current invention.
Figure 6 illustrates an exemplary process for UE to create a new MAC entity and maintain the source MAC entity if dual stack is used in accordance with embodiments of the current invention.
Figure 7 illustrates exemplary processes of UE to keep the TAG for source cell and perform random access (RA) at the first access to target cell and skip the RA procedure when switch back to source cell and switch again to target cell in accordance with embodiments of the current invention.
Figure 8 illustrates an exemplary overall flow of inter-cell beam management in accordance with embodiments of the current invention.
Figure 9 illustrates an exemplary flowchart for UE to perform inter-cell beam management for single stack and dual stack UE in accordance with embodiments of the current invention.
Figure 10 illustrates an exemplary flow chart for the TA acquisition and maintenance for mobility with inter-cell beam management in accordance with embodiments of the current invention.

### DETAILED DESCRIPTION

Reference will now be made in detail to some embodiments of the invention, examples of which are illustrated in the accompanying drawings.

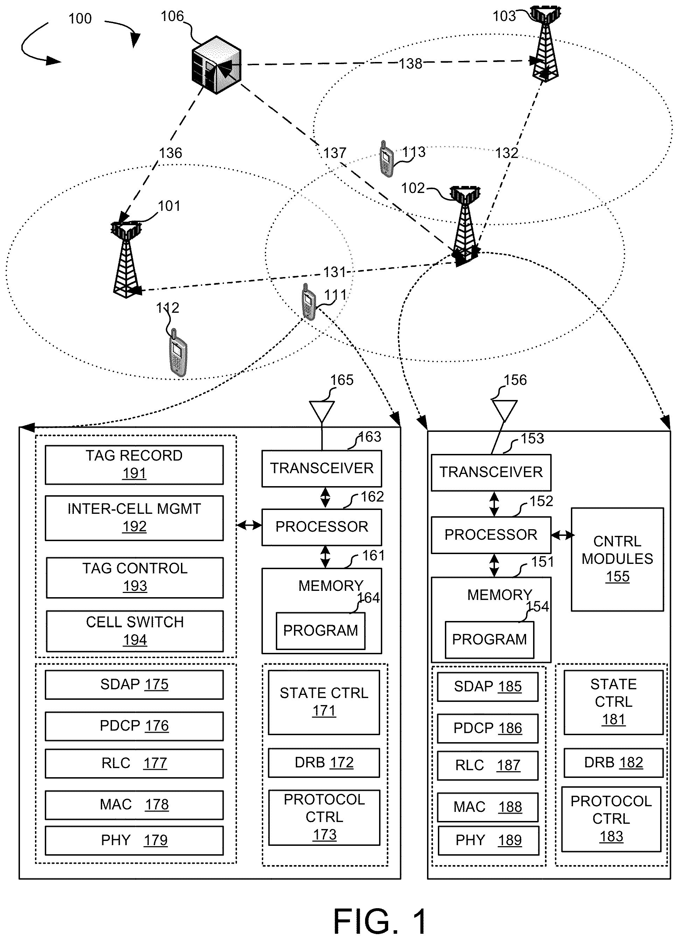

Figure 1 is a schematic system diagram illustrating an exemplary wireless network for TA maintenance and acquisition for mobility during ICBM in accordance with embodiments of the current invention. Wireless system 100 includes one or more fixed base infrastructure units forming a network distributed over a geographical region. As an example, base stations/gNBs 101, 102, and 103 serve a number of mobile stations, such as UE 111, 112, and 113, within a serving area, for example, a cell, or within a cell sector. In some systems, one or more base stations are coupled to a controller forming an access network that is coupled to one or more core networks, through a network entity, such as network entity 106. gNB 101, gNB 102 and gNB 103 are base stations in NR, the serving area of which may or may not overlap with each other. As an example, UE 112 is connected with gNB 101 only. UE 111 in the overlapping service area of gNB 101 and gNB 102 and may switch back and forth between gNB 101 and gNB 102. UE 113 in the overlapping service area of gNB 102 and gNB 103 and may switch back and forth between gNB 102 and gNB 103. Base stations, such as gNB 101, 102, and 103 are connected the network through network entities, such as network entity 106 through connections, such as 136, 137, and 138, respectively. Backhaul connections, such as Xn connections 131 and 132 connect the non-co-located receiving base units. Xn connection 131 connects gNB 101 and gNB 102. Xn connection 132 connects gNB 102 and gNB 103. These backhaul connections can be either ideal or non-ideal.

When the UE, such as UE 111, is in the overlapping area, L1/L2-based inter-cell mobility is performed. For L1/L2 based inter-cell mobility with beam management, the network can take advantage of ping-pong effects, i.e., cell switch back and forth between the source and target cells, to select the best beams among a wider area including both the source cell and target cell for throughput boosting during UE mobility. L1/L2 based inter-cell mobility is more proper for the scenarios of intra-DU and inter-DU cell change. Ping-pong effect is not concerned in those scenarios. For intra-DU cell change, there is no additional signaling/latency needed at the network side; for inter-DU cell change, the F1 interface between DU and CU can support high data rate with short latency. L1/L2 based inter-cell mobility is supportable considering the F1 latency is 5ms. During L1/L2 based inter-cell mobility, UL time alignment is required with the corresponding serving cell. By default, UE needs to perform random access (RA) procedure towards the cell, to which UE accesses. Considering that UE may be switched back-and-forth between different cells, it is complicated and power-consumed if UE always performs RA procedure towards the cell to which UE is switched.

In one novel aspect, UE performs TA maintenance and acquisition for multiple TA groups (TAGs) to enable L1/L2 based inter-cell mobility with beam management. Preferably, the source cell TAGs with associated source TAT are acquired and maintained during HO. The source TAT keeps running after UE switches to a new target cell. When UE performs a cell switch, the UE determines if a valid TAG for the target cell exists. If the target TAG is valid, the UE skips the RA procedure and switches to the target cell. The target TAG is valid when the UE finds a TAG for the target cell exists and the TAT associated with the TAG for the target cell does not expire.

Figure 1 further illustrates simplified block diagrams of a base station and a mobile device/UE for TA maintenance and acquisition. gNB 102 has an antenna 156, which transmits and receives radio signals. An RF transceiver circuit 153, coupled with the antenna, receives RF signals from antenna 156, converts them to baseband signals, and sends them to processor 152. RF transceiver 153 also converts received baseband signals from processor 152, converts them to RF signals, and sends out to antenna 156. Processor 152 processes the received baseband signals and invokes different functional modules to perform features in gNB 102. Memory 151 stores program instructions and data 154 to control the operations of gNB 102. gNB 102 also includes a set of control modules 155 that carry out functional tasks to communicate with mobile stations. An RRC state controller 181 performs access control for the UE. A DRB controller 182 performs control function to establish/add, reconfigure/modify, and release/remove a DRB based on different sets of conditions for DRB establishment, reconfiguration and release. A protocol stack controller 183 manages to add, modify or remove the protocol stack for the DRB. The protocol Stack includes PHY layer 189, MAC layer 188, RLC layer 187, PDCP layer 186 and SDAP layer 185. Preferably, the MAC entity 188 controls two TAGs associated to the first cell and the second cell respectively. Alternatively preferably, the MAC entity 188 controls one TAG associated to the first or the second cell. Alternatively or additionally preferably the MAC entity 188 controls multiple TAGs associated to multiple candidate cells. Preferably, the TAGs are pTAGs(primary TAGs).Alternatively or additionally preferably, uplink Tas for different cell TAGs are maintained independently.

UE 111 has an antenna 165, which transmits and receives radio signals. An RF transceiver circuit 163, coupled with the antenna, receives RF signals from antenna 165, converts them to baseband signals, and sends them to processor 162. Preferably, the RF transceiver may comprise two RF modules (not shown). A first RF module is used for HF transmitting and receiving, and the other RF module is used for different frequency bands transmitting and receiving, which is different from the HF transceiver. RF transceiver 163 also converts received baseband signals from processor 162, converts them to RF signals, and sends out to antenna 165. Processor 162 processes the received baseband signals and invokes different functional modules to perform features in the UE 111. Memory 161 stores program instructions and data 164 to control the operations of the UE 111. Antenna 165 sends uplink transmission and receives downlink transmissions to/from antenna 156 of gNB 102.

UE 111 also includes a set of control modules that carry out functional tasks. These control modules can be implemented by circuits, software, firmware, or a combination of them. A RRC State controller 171 controls UE RRC state according to network's command and UE conditions. RRC supports the following states, RRC_IDLE, RRC_CONNECTED and RRC_INACTIVE. A DRB controller 172 controls to establish/add, reconfigure/modify and release/remove a DRB based on different sets of conditions for DRB establishment, reconfiguration and release. A protocol stack controller 173 manages to add, modify or remove the protocol stack for the DRB. The protocol Stack includes SDAP layer 175, PDCP layer 176, RLC layer 177, MAC layer 178 and PHY layer 179. A TAG record module 191 maintains a plurality of TAGs, wherein each TAG is associated with a cell and a TA timer (TAT). An intercell management module 192 receives an inter-cell beam management indication to switch from a first cell to a second cell, wherein the UE is connected with the first cell with a first-cell TAG associated with the first cell. A TAG control module 193 determines whether a TAG associated with the second cell is valid upon receiving the inter-cell beam management indication to switch. A cell switch controller 194 performs a cell switch to the second cell by skipping a random access (RA) process when the UE determines a second-cell TAG associated with the second cell is valid.

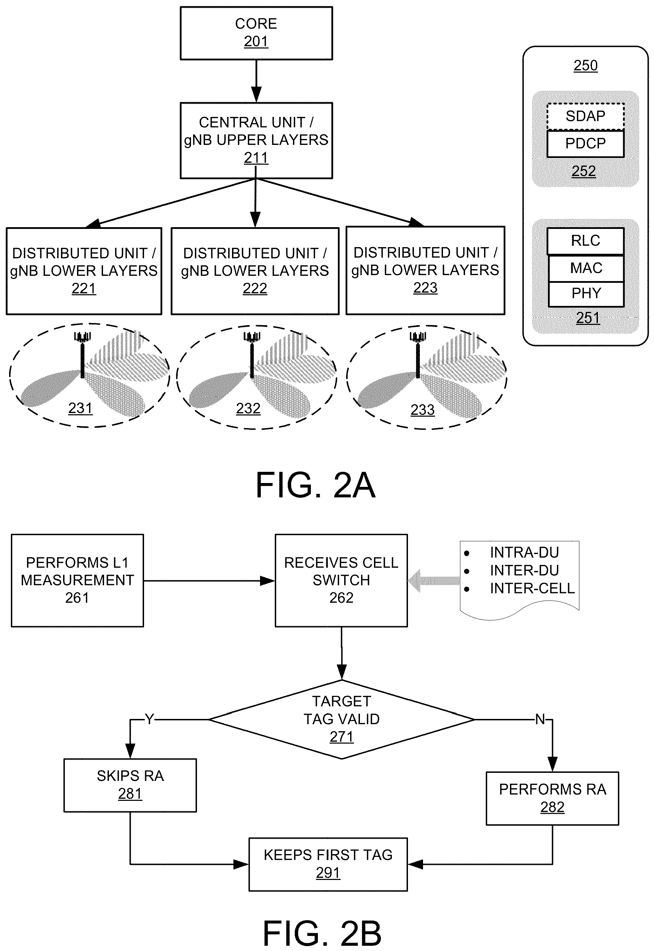

Figure 2A illustrates an exemplary NR wireless system with centralized upper layers of the NR radio interface stacks in accordance with embodiments of the current invention. Different protocol split options between central unit (CU) and distributed unit (DU) of gNB nodes may be possible. The functional split between the CU and DU of gNB nodes may depend on the transport layer. Low performance transport between the CU and DU of gNB nodes can enable the higher protocol layers of the NR radio stacks to be supported in the CU, since the higher protocol layers have lower performance requirements on the transport layer in terms of bandwidth, delay, synchronization and jitter. Preferably, SDAP and PDCP layer are located in the CU, while RLC, MAC and PHY layers are located in the DU. A Core unit 201 is connected with one central unit 211 with gNB upper layer 252. Preferably 250, gNB upper layer 252 includes the PDCP layer and optionally the SDAP layer. Central unit 211 is connected with distributed units 221, 222, and 221. Distributed units 221, 222, and 223 each corresponds to a cell 231, 232, and 233, respectively. The DUs, such as 221, 222 and 223 include gNB lower layers 251. Preferably, gNB lower layers 251 include the PHY, MAC and the RLC layers.

Figure 2B illustrates an exemplary diagram for inter-cell beam management with TA maintenance in accordance with embodiments of the current invention. At step 261, the UE performs L1 measurements and sends measurement reports to the network. At step 262, the UE receives cell switch command from the network to switch to a target cell. The cell switch can an intra-DU cell switch, an inter-DU cell switch or an inter-cell cell switch. At step 271, the UE determines if the target TAG is valid. The target TAG is valid when there is the target TAG exists and a TAT of the target TAG is running. If step 271 determines yes, the UE, at step 281, skips RA. If step 271 determines no, the UE, at step 282, performs RA. At step 291, after the success cell switch to the target cell, the UE maintains the first cell/source cell TAG by keeping the TAG and keeping the TAT associated with TAG running.

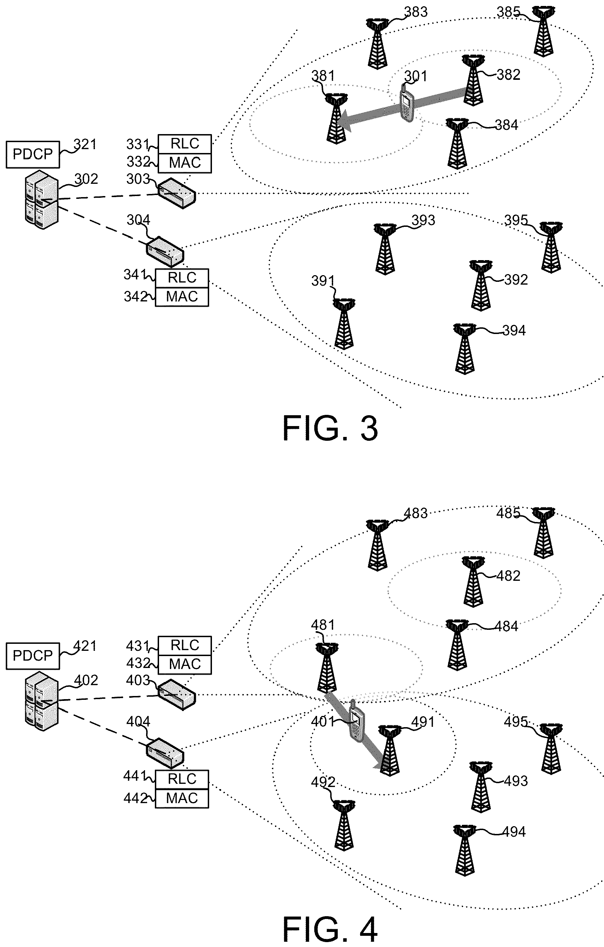

Figure 3 illustrates an exemplary deployment scenario for intra-DU inter-cell beam management in accordance with embodiments of the current invention. A CU 302 (Central Unit) is connected to two DUs 303 and 304 (Distributed Unit) through the F1 interface. CU 302 includes protocol stack PDCP 321. DU 303 includes protocol stack RLC 331 and MAC 332. DU 304 includes protocol stack RLC 341 and MAC 342. DU 303 and DU 304 are connected to multiple radio units (RUs) respectively. A cell may consist of a range covered by one or more RUs under the same DU. RUs / gNBs 381, 382, 383, 384, and 385 are connected with DU 303. RUs / gNBs 391, 392, 393, 394, and 395 are connected with DU 304. In this scenario, a UE 301 is moving from the edge of one cell served by gNB 382 to another cell served by gNB 381, which two belong to the same DU and share a common protocol stack. Intra-DU intercell beam management can be used in this scenario to replace the legacy handover process to reduce the interruption and improve the throughput of UE. Preferably, single protocol stack at the UE side (common RLC/MAC) is used to handle L1/L2 inter-cell beam management with mobility.

Figure 4 illustrates an exemplary deployment scenario for inter-DU inter-cell beam management in accordance with embodiments of the current invention. A CU 402 is connected to two DUs, DU 403 and DU 404 through the F1 interface. CU 402 includes protocol stack PDCP 421. DU 403 includes protocol stack RLC 431 and MAC 432. DU 404 includes protocol stack RLC 441 and MAC 442. DU 403 and DU 404 are connected to multiple RUs respectively. A cell may consist of a range covered by one or more RUs under the same DU. RUs / gNBs 481, 482, 483, 484, and 485 are connected with DU 403. RUs / gNBs 491, 492, 493, 494, and 495 are connected with DU 404. In this scenario, a UE 401 is moving from the edge of one cell served by gNB 481 to another cell served by gNB 491, which belong to different DUs, DU 403 and DU 404, respectively, and share a common CU 402. The low layer user plane (RLC, MAC) is different in two DUs while high layer (PDCP) remains the same. Inter-DU inter-cell beam management can be used in this scenario to replace the legacy handover process to reduce the interruption and improve the throughput of UE. Preferably, single protocol stack at the UE side (common RLC/MAC) is used to handle L1/L2 inter-cell beam management with mobility. Alternatively preferably, dual protocol stack at the UE side (separate RLC/MAC) are used to handle L1/L2 inter-cell beam management with mobility.

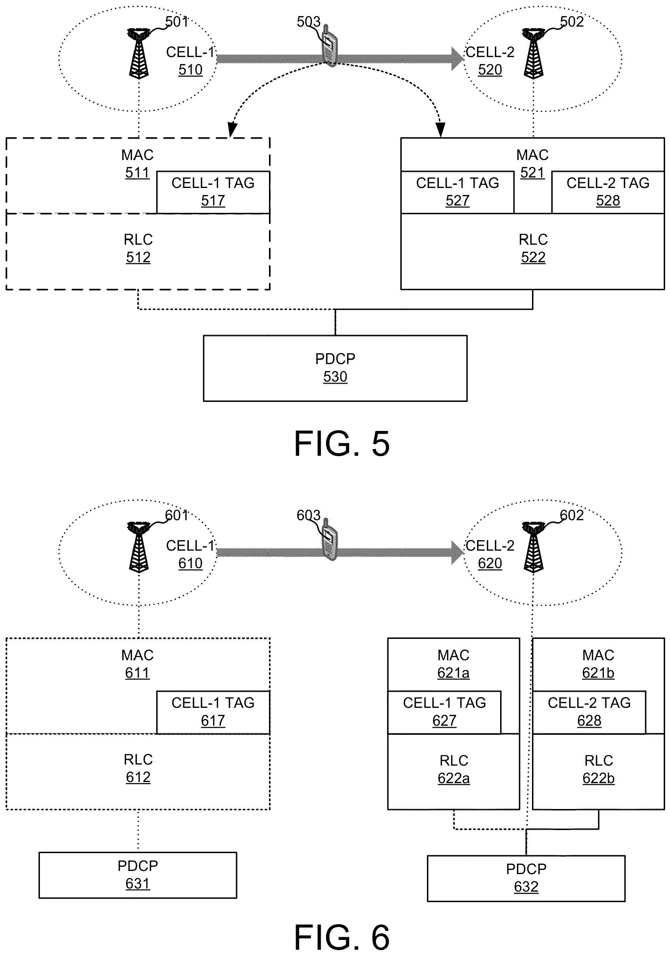

Figure 5 illustrates an exemplary process for UE to partial reset MAC entity and maintain the TAG from the source cell if single stack is used at the UE side in accordance with embodiments of the current invention. A UE 503 is connected with gNB 501 in cell 510. UE 503 performs inter-cell measurements for a target cell 520 served by gNB 502. UE 503 is configured with single protocol stack, with a RLC 512 and a MAC 511, and PDCP 530. A cell-1 TAG 517 for the cell 510 is created and maintained by UE 503. Preferably, the cell switch is performed within the same DU. Alternatively preferably, the cell switch is performed across different DUs. UE may receive the inter-cell beam management indication when approaching a neighbor cell, such as cell 520. Preferably, the UE is configured to use inter-cell beam management single-stack for inter-cell beam management. Preferably, the inter-cell beam management indication is a MAC Control Element (MAC CE). When receiving the inter-cell beam management indication, UE creates one TAG for the target cell, resets MAC entity except keeping the TAG of the source cell and maintain the associated TAT of the source cell, and re-establishes the RLC entity and switch to the target cell. After the cell switch, UE 503 has the protocol stack of PDCP 530, RLC 522 and MAC 521. The TAG 528 of cell 520 is created and maintained. the TAG of the source cell cell-1 TAG 527 will be maintained, and the TAT keeps running until it expires.

Figure 6 illustrates an exemplary process for UE to create a new MAC entity and maintain the source MAC entity if dual stack is used in accordance with embodiments of the current invention. A UE 603 is connected with gNB 601 in cell 610. UE 603 performs inter-cell measurements for a target cell 620 served by gNB 602. UE 603 is configured with dual protocol stack, with an active PDCP 631, RLC 612 and a MAC 611. A cell-1 TAG 617 for the cell 610 is created and maintained by UE 603. Preferably, the cell switch is performed across different DUs. UE may receive the inter-cell beam management indication when approaching a neighbor cell. Preferably, the UE is configured to use dual-stack for inter-cell beam management. Preferably, the inter-cell beam management indication is a MAC Control Element (MAC CE). Preferably, UE 603 creates a new MAC entity MAC 621b for the target cell in the preconfiguration before the inter-cell beam management indication. When receiving the inter-cell beam management indication, UE switches to the target cell with the new MAC entity 621b for data transmission/reception. After the cell switch, UE 603 has the dual protocol stack of MAC 621a, RLC 622a and PDCP 632. The dual protocol stack also includes MAC 621b, RLC 622b for cell 620. The TAG 627 of the source cell will be maintained and the TAT keeps running until the it expires. TAG 628 corresponding to cell 620 is maintained in the corresponding protocol stack as well.

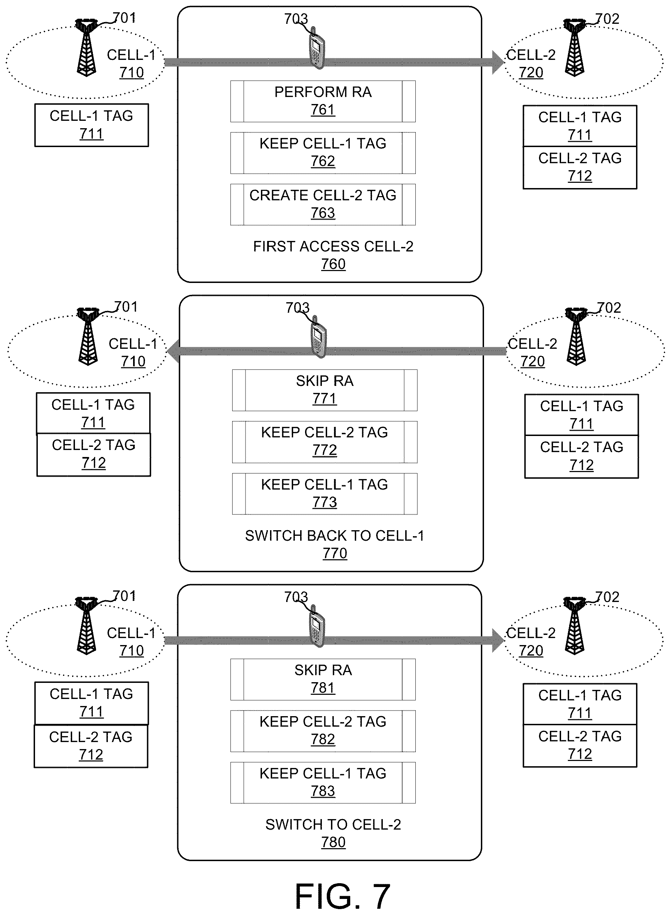

Figure 7 illustrates exemplary processes of UE to keep the TAG for source cell and perform random access (RA) at the first access to target cell and skip the RA procedure when switch back to source cell and switch again to target cell in accordance with embodiments of the current invention. A UE 703 is connected with gNB 701 in cell-1 710. A cell-1 TAG 711 is created and maintained when UE 703 initial accesses cell-1 710. A neighboring cell-2 720 is served by gNB 702. When UE 703 first accesses cell-2 720, procedure 760 is performed. When receiving the inter-cell beam management indication, at step 761, UE performs RA procedure towards the second cell 720. Meanwhile, at step 762, the TAG 711 of the source (first) cell is maintained, and TAT of the TAG 711 keeps running. At step 763, cell-2 TAG 712 is created upon RA success. UE 703 connects to cell-2 720. The second cell 720 is considered as the source cell after RA procedure is successfully completed.

After UE 703 connects to cell-2 720, procedure 770 is performed to switch back to the first cell and skip the RA procedure while keep the TAG of the second cell in accordance with embodiments of the current invention. UE 703 receives the inter-cell beam management indication from the network to switch back to the first cell 710 according to the L1 measurement report. The second cell 720 is considered as the source cell and the first cell 710 is considered as the target cell, since UE relies on the second cell 720 for communication with the network. When receiving the inter-cell beam management indication to switch back to the first cell, UE 703 keeps the TAG 712 for the source(second) cell 720 at step 772 and check the TAG of the target (first) cell 710. Preferably, at step 771, UE 703 skips the RA procedure towards the target(first) cell when the associated TAT is running, which is the TAT for cell-1 TAG 711. Then UE switches to the target(first) cell 710. Meanwhile, at step 772, the TAG 712 of the source (second) cell 720 is maintained, and TAT of the TAG 712 keeps running. Also, at step 773, the TAG 711 of the target (first) cell 710 is maintained.

After UE switches back to cell-1 710, procedure 780 is performed to switch again to the second cell and skip the RA procedure while keep the TAG of the first cell. UE 703 receives the inter-cell beam management indication from the network to switch again to the second cell 720 according to the L1 measurement report. The second cell 720 is considered as the target cell and the first cell 710 is considered as the source cell, since UE relies on the first cell 710 for communication with the network. When receiving the inter-cell beam management indication to switch again, UE keep the TAG 711 for the source(first) cell 710 and check the TAG for the target (second) cell. Preferably, UE 703 skips the RA procedure towards the target(second) cell 720 when TAG associated with the target cell, i.e., TAG 712, exists and the associated TAT of TAG 712 is running. The UE 703, at step 718, skips RA and switches to the target(second) cell. At step 782, the UE keeps the TAG 712 of cell-2 720. Meanwhile, at step 783, the TAG 711 of the source (first) cell 710 is maintained, and TAT of the TAG 711 keeps running as it is.

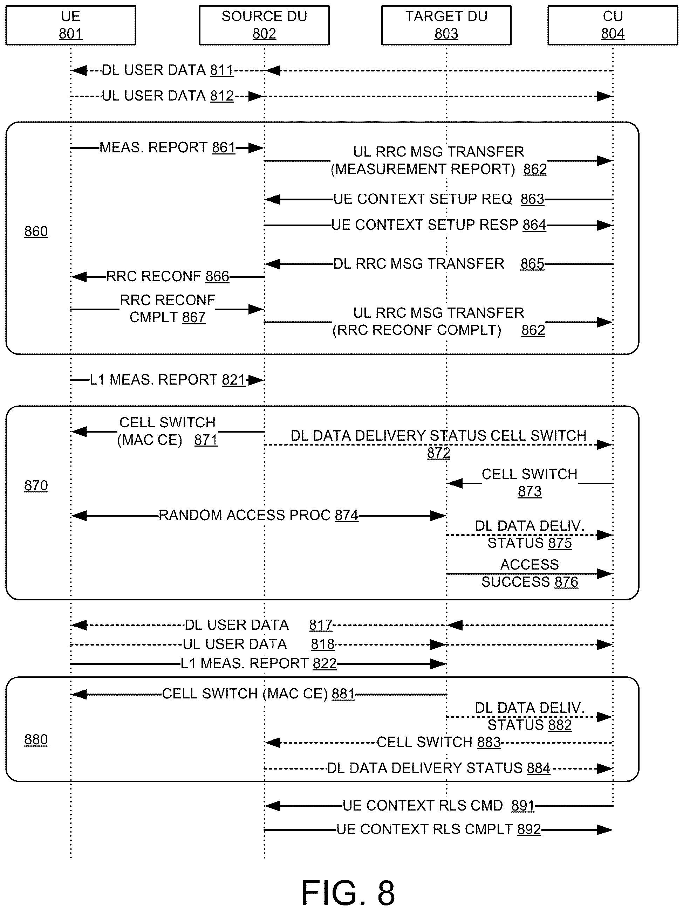

Figure 8 illustrates an exemplary overall flow of inter-cell beam management in accordance with embodiments of the current invention. UE 801 is connected with the wireless network through a source DU 802 and CU 804. A neighboring cell is served with a target DU 803. At step 811, downlink (DL) user data is transmitted through CU 804 to source DU 802 and to UE 801. At step 812, uplink (UL) user data is sent from UE 801 to DU 802 and to CU 804. Pre-configuration 860 is provided first by network before the inter-cell beam management is executed. At step 861, UE 801 sends measurement reports to source DU 802. DU 802, at step 862, transfers the measurement report through UL RRC message transfer to CU 804. At step 863, CU 804 sends UE context setup request to DU 802. At step 864, DU 802 sends UE context setup response to CU 804. Network provides the pre-configuration and prepares the target/candidate cell according to UE measurement. Preferably, the preconfiguration is performed by RRC reconfiguration message. At step 865, CU 804 sends DL RRC message transfer with RRCReconfiguration to DU 802. At step 866, DU 802 sends RRCReconfiguration to UE 801. Preferably, UE creates a TAG for the target cell when receiving the RRC configuration for the second cell. Alternatively or additionally preferably, UE creates a TAG for the target cell upon reception of the inter-cell beam management indication. Alternatively or additionally preferably, UE creates a new MAC entity for the target cell when receiving the RRC configuration for the second cell. UE 801, at step 867, sends RRCReconfiguration complete message to DU 802. DU 802, sends UL RRC message transfer with RRCRecofniguration complete message to CU 804.

After the pre-configuration, at step 821, UE 801 sends L1 measurement report to the network through DU 802. If an inter-cell beam management indication is received, UE keeps the TAG for the source cell and check the TAT for the TAG associated to the target cell. Preferably, if TAT of the TAG associated to the target cell is not running, procedure 870 is performed for cell switch to a target cell without a valid TAG. At step 871, source DU 802 sends cell switch indication through MAC CE to UE 801. DU 802, at step 872, sends DL data delivery status cell switch message to CU 804. At step 873, CU 804 sends cell switch indication to target DU 803. At step 874, UE performs random access procedure toward the target cell. At step 875, target DU 803 sends DL data delivery status to CU 804. At step 876, target DU 803 sends access success message to CU 804. UE 801 is now switched to target DU 803.

At step 817, CU 804 sends DL user data through DU 803 to UE 801. At step 818, UE 801 sends UL user data to DU 803. At step 822, UE 801 sends L1 measurement report to DU 803. If TAT of the TAG associated to the target cell is running, procedure 880 is performed where the RA is skipped. At step 881, DU 803, which is now the source DU sends cell switch indication through MAC CE to UE 801. UE 801, upon determining the TAG associated with target cell, which is DU 802, is valid, skips RA procedure and switched to the target cell served by DU 802 upon reception of the inter-cell beam management indication. At step 882, DU 803 sends DL data delivery status to CU 804. At step 883, CU 804 sends cell switch indication to DU 802. At step 884, DU 802 sends DL data delivery status to CU 804. UE 801 now switches back to DU 802. At step 891, CU 804 sends UE context release command to DU 802. At step 892, DU 802 sends UE context release complete to CU 804.

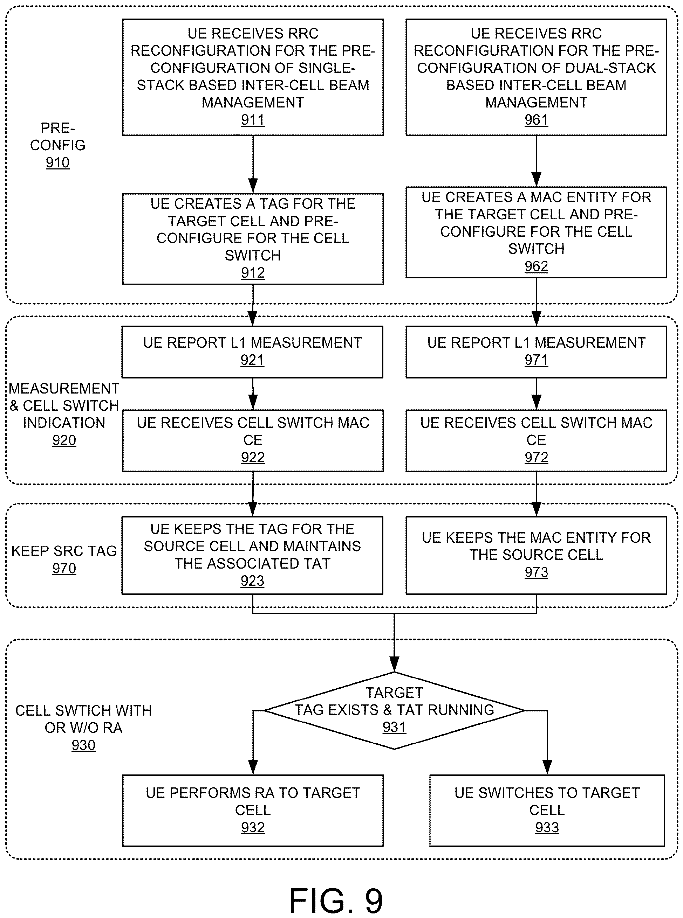

Figure 9 illustrates an exemplary flowchart for UE to perform inter-cell beam management for single stack and dual stack UE in accordance with embodiments of the current invention. Preferably, the cell switch is performed within the same DU. Alternatively preferably, the cell switch is performed across different DUs. Before the cell switch, UE performs preconfiguration procedure 910. For single stack UE, at step 911, the UE receives the RRC reconfiguration for the pre-configuration of single stack based intercell beam management indicating the cell switch. At step 912, the UE creates a TAG for the target cell and preconfigures for the cell switch. For dual stack UE, at step 961, the UE receives the RRC reconfiguration for the preconfiguration of dual stack based intercell beam management indicating the cell switch. At step 962, the UE creates a MAC entity for the target cell and preconfigures for the cell switch.

At step 921, for the single stack UE, the UE report L1 measurement to the network after the pre-configuration. At step 922, the UE receives the inter-cell beam management indication. At step 971, for the dual stack UE, the UE report L1 measurement to the network after the preconfiguration. At step 972, the UE receives the inter-cell beam management indication. Procedure 970 is performed to keep / maintain the source TAG while performing cell switching. For single stack based UE, at step 923, the UE performs partial MAC reset while keep the TAG of source cell and maintain the associated TAT. For dual stack based UE, at step 973, the UE keeps the MAC for the source cell, with the source TAG and keeps the TAT of the source TAG running. At procedure 930, the UE performs cell switch with or without RA based on the status of the target TAG. At step 931, the UE checks the TAT of the TAG associated to the target cell. Preferably, at step 932, UE access the target cell at the first time, or the TAT of the TAG associated to the target cell is not running, thereby, the UE performs random access toward the target cell. The UE switches to the target cell after the RA success. If TAT of the TAG of the target cell is running, at step 933, the UE skips the RA procedure and switches to the target cell directly.

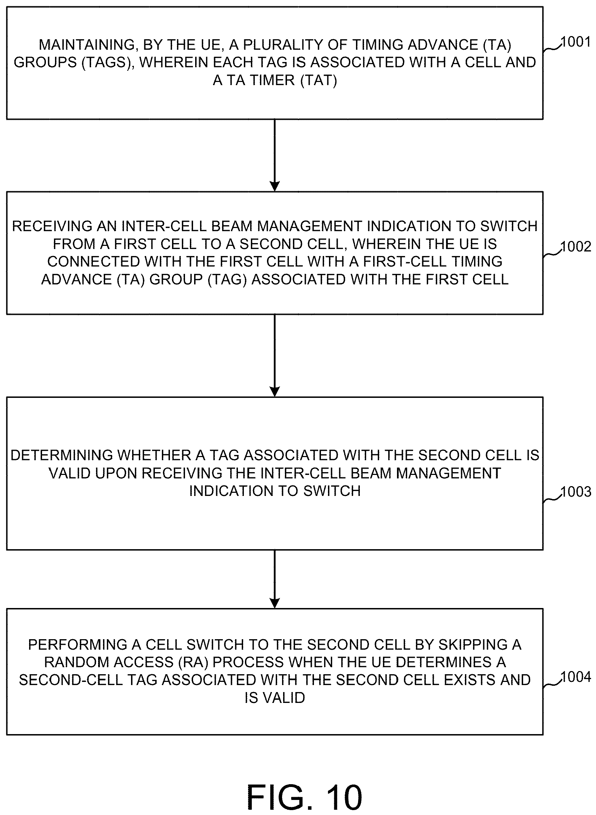

Figure 10 illustrates an exemplary flow chart for the TA acquisition and maintenance for mobility with intercell beam management in accordance with embodiments of the current invention. At step 1001, the UE maintains a plurality of timing advance (TA) groups (TAGs), wherein each TAG is associated with a cell and a TA timer (TAT). At step 1002, the UE receives an inter-cell beam management indication to switch from a first cell to a second cell, wherein the UE is connected with the first cell with a first-cell timing advance (TA) group (TAG) associated with the first cell. At step 1003, the UE determines whether a TAG associated with the second cell is valid upon receiving the inter-cell beam management indication to switch. At step 1004, the UE performs a cell switch to the second cell by skipping a random access (RA) process when the UE determines a second-cell TAG associated with the second cell is valid.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method for a user equipment, in the following also referred to as UE, comprising:
maintaining, by the UE, a plurality of timing advance, in the following also referred to as TA, groups, in the following also referred to as TAGs, wherein each TAG is associated with a cell and a TA timer, in the following also referred to as TAT, (1001);
receiving an inter-cell beam management indication to switch from a first cell to a second cell, wherein the UE is connected with the first cell with a first-cell TAG associated with the first cell (1002);
determining whether a TAG associated with the second cell is valid upon receiving the inter-cell beam management indication to switch (1003); and
performing a cell switch to the second cell by skipping a random access, in the following also referred to as RA, process when the UE determines a second-cell TAG associated with the second cell is valid (1004).

2. The method of claim 1, wherein the second-cell TAG is determined to be valid when there is the second-cell TAG exists and a TAT of the second-cell TAG is running.

3. The method of claim 1 or 2, further comprising performing a RA to the second cell when the UE determines that there is no TAG associated with the second cell or when a TAT of the second-cell TAG expires.

4. The method of claim 3, further comprising creating and maintaining the second-cell TAG associated with the second cell upon success of the RA to the second cell.

5. The method of any one of claims 1 to 4, where a TAG for the first cell is created when a radio resource control, in the following also referred to as RRC, configuration is received for the first cell.

6. The method of any one of claims 1 to 5, wherein the first cell and the second cell belong to a same cell group.

7. The method of any one of claims 1 to 6, the performing of the cell switch comprises performing a partial MAC reset and maintaining a TAT associated with the first cell.

8. The method of any one of claims 1 to 5 and 7, wherein the first cell and the second cell belong to different cell groups.

9. The method of any one of claims 1 to 8, further comprising creating a MAC entity for the second cell.

10. The method of any one of claims 1 to 9, wherein uplink TAs for the first-cell TAG and the second-cell TAG are maintained independently.

11. A user equipment, in the following also referred to as UE, (111), comprising:
a transceiver (163) that transmits and receives radio frequency, in the following also referred to as RF, signal in a wireless network;
a timing advance, in the following also referred to as TA, groups, in the following also referred to as TAG, record module (191) that maintains a plurality of TAGs, wherein each TAG is associated with a cell and a TA timer, in the following also referred to as TAT;
an inter-cell management module (192) that receives an inter-cell beam management indication to switch from a first cell to a second cell, wherein the UE (111) is connected with the first cell with a first-cell TAG associated with the first cell;
a TAG control module (193) that determines whether a TAG associated with the second cell is valid upon receiving the inter-cell beam management indication to switch; and
a cell switch controller (194) that performs a cell switch to the second cell by skipping a random access, in the following also referred to as RA, process when the UE (111) determines a second-cell TAG associated with the second cell is valid.

12. The UE (111) of claim 11, wherein the second-cell TAG is determined to be valid when there is the second-cell TAG exists and a TAT of the second-cell TAG is running.

13. The UE of claim 11 or 12, wherein the UE (111) performs a RA to the second cell when the UE (111) determines that there is no TAG associated with the second cell or when a TAT of the second-cell TAG expires.

14. The UE of claim 14, wherein the UE (111) creates and maintains the second-cell TAG associated with the second cell upon success of the RA to the second cell.

15. The UE of any one of claims 11 to 14, where a TAG for the first cell is created when a radio resource control, in the following also referred to as RRC, configuration is received for the first cell.
